# EUROPÄISCHE PATENTSCHRIFT

(11) **EP 2 632 571 B1**
(45) Veröffentlichungstag und Bekanntmachung des Hinweises auf die Patenterteilung: **28.06.2017**
(21) Anmeldenummer: 11770696.0
(22) Anmeldetag: 05.10.2011
(51) Int. Cl.: B01D 63/08, F24F 3/14, B01D 61/00, B01D 53/26, F25B 43/00

(54) **VORRICHTUNG ZUM TROCKNEN UND/ODER KÜHLEN VON GAS**
APPARATUS FOR DRYING AND/OR COOLING GAS
DISPOSITIF DE SÉCHAGE ET/OU DE REFROIDISSEMENT DE GAZ

(30) Priorität: 29.10.2010 DE 102010050042
(43) Veröffentlichungstag der Anmeldung: 04.09.2013
(73) Patentinhaber: Major Bravo Limited, Road Town, Tortola (VG)
(72) Erfinder: HEINZL, Wolfgang, 83561 Ramerberg (DE)
(74) Vertreter: 2K Patentanwälte Blasberg Kewitz & Reichel
(86) Internationale Anmeldenummer: PCT/EP2011/004967
(87) Internationale Veröffentlichungsnummer: WO 2012/055477

(56) Entgegenhaltungen:
- EP-A1- 2 354 710
- EP-A2- 0 678 321
- JP-A- 11 051 421
- US-A- 4 915 838
- US-A1- 2003 230 092
- US-A1- 2004 099 140
- US-A1- 2009 000 939
- US-B1- 6 716 355

## Beschreibung

Die Erfindung betrifft eine Vorrichtung zum Trocknen und/oder Kühlen von Gas, insbesondere Luft, mittels einer hygroskopischen Lösung. Eine solche Vorrichtung ist beispielsweise in Klimatisierungsanlagen oder dergleichen einsetzbar.

Hygroskopische Lösungen besitzen die Eigenschaft, Feuchtigkeit aus der Umgebung zu binden. Eine entsprechende hygroskopische Lösung kann beispielsweise aus einer wässrigen Salzlösung von insbesondere Lithiumchlorid, Lithiumbromid, Calciumchlorid, einer der neu entwickelten sogenannten ionischen Lösungen und/oder dergleichen bestehen. Die Absorptionsfähigkeit einer solchen Lösung steigt unter anderem mit sinkender Temperatur.

Das Dokument JP 11 051421 A beschreibt eine Vorrichtung zum Trocknen von Gas mittels einer hygroskopischen Lösung. Die Vorrichtung umfasst einen Gasströmungskanal und einen die hygroskopische Lösung führenden Strömungskanal. Es ist eine Membran vorgesehen, die für Feuchtigkeit durchlässig ist und die es erlaubt, dass Feuchtigkeit aus dem Gas über die Membran in die hygroskopische Lösung übergeht und in dieser absorbiert wird. Zur Regeneration der hygroskopischen Lösung ist eine Regenerationseinheit vorgesehen.

Weitere Vorrichtungen zum Trocknen von Gas sind in den Dokumenten EP 0 678 321 A2, US 2004 / 0 099 140 A1 und US 4 915 838 A beschrieben.

Herkömmliche Vorrichtungen zur Membrandestillation sind aus den Dokumenten US 6 716 355 B1 und US 2009 / 0 000 939 A1 bekannt.

Ziel der Erfindung ist es, eine verbesserte Vorrichtung der eingangs genannten Art zu schaffen, die bei möglichst einfachem, kompaktem Aufbau eine möglichst hohe Trocknungs- bzw. Kühlleistung gewährleistet.

Erfindungsgemäß wird diese Aufgabe gelöst durch eine Vorrichtung zum Trocknen und/oder Kühlen von Gas, insbesondere Luft, mittels einer hygroskopischen Lösung, mit einer Absorptionseinrichtung, die wenigstens einen Gasströmungskanal sowie wenigstens einen die hygroskopische Lösung führenden Strömungskanal umfasst, wobei der Innen- oder Gasraum eines jeweiligen Gasströmungskanals zumindest teilweise durch eine dampfdurchlässige flüssigkeitsdichte Membranwand begrenzt ist und wenigstens ein zwischen einem solchen Gasströmungskanal und einem an diesen angrenzenden weiteren solchen Gasströmungskanal oder einer angrenzenden Kühleinheit gebildeter, die hygroskopische Lösung führender Strömungskanal vorgesehen ist, so dass Feuchtigkeit, insbesondere Wasserdampf, aus dem Gas über die Membranwand in die hygroskopische Lösung übergeht und in dieser absorbiert wird.

Aufgrund dieser Ausbildung kann die Vorrichtung bei relativ großer Trocknungs- bzw. Kühlleistung relativ einfach und kompakt gehalten werden. Es kann problemlos insbesondere auch eine größere Anzahl von Gasströmungskanälen vorgesehen sein, wodurch das Leistungsvermögen entsprechend weiter erhöht werden kann.

Die hygroskopische Lösung durchströmt die Absorptionseinrichtung vorzugsweise im Gegenstrom zum Gas.

Die Absorptionseinrichtung kann insbesondere mehrere zueinander parallele Gasströmungskanäle sowie mehrere zueinander parallele die hygroskopische Lösung führende Strömungskanäle umfassen.

Die die hygroskopische Lösung führenden Strömungskanäle der Absorptionseinrichtung können beispielsweise jeweils zwischen zwei aneinandergrenzenden Gasströmungskanälen gebildet sein.

Es sind jedoch auch solche Ausführungsformen denkbar, bei denen die die hygroskopische Lösung führenden Strömungskanäle der Absorptionseinrichtung jeweils zwischen einem Gasströmungskanal und einer angrenzenden Kühleinheit gebildet sind. Eine jeweilige Kühleinheit umfasst hierbei vorzugsweise einen zumindest teilweise von einer fluiddichten wärmeleitenden Wand begrenzten Kühlfluidraum.

Erfindungsgemäß umfasst die Vorrichtung eine Regenerationseinrichtung, der die aus der Absorptionseinrichtung austretende hygroskopische Lösung zugeführt wird und in der die hygroskopische Lösung regeneriert wird. Die regenerierte hygroskopische Lösung kann dann wieder der Absorptionseinrichtung zugeführt werden.

Erfindungsgemäß umfasst die Regenerationseinrichtung mehrere zueinander parallele Gasströmungskanäle sowie mehrere zueinander parallele die hygroskopische Lösung führende Strömungskanäle, wobei die die hygroskopische Lösung führenden Strömungskanäle jeweils zwischen einem Gasströmungskanal und einer angrenzenden Heizeinheit gebildet sind. Der Innen- oder Gasraum eines jeweiligen Gasströmungskanals ist zumindest teilweise durch eine dampfdurchlässige flüssigkeitsdichte Membranwand begrenzt. Ferner ist wenigstens ein zwischen einem solchen Gasströmungskanal und einer an diesen angrenzenden Heizeinheit gebildeter, die hygroskopische Lösung führender Strömungskanal vorgesehen, so dass Feuchtigkeit, insbesondere Wasserdampf, aus der hygroskopischen Lösung über die Membranwand in das Gas übergeht und die hygroskopische Lösung konzentriert wird.

Die regenerierte hygroskopische Lösung kann der Absorptionseinrichtung über einen Kühler zugeführt werden. Durch die zusätzliche Kühlung wird die Absorptionsfähigkeit der in der Absorptionseinrichtung wieder verwendeten hygroskopischen Lösung weiter erhöht.

Das aus der Absorptionseinrichtung austretende Gas wird vorzugsweise einem Verbraucher zugeführt.

Insbesondere bei einem Verbraucher mit wenig Gasverlust kann das vom Verbraucher kommende Gas der Regenerationseinrichtung zugeführt werden. Hierbei kann es von Vorteil sein, wenn das vom Verbraucher kommende Gas der Regenerationseinrichtung über einen Wärmetauscher zugeführt wird, in dem das Gas vorzugsweise erwärmt wird.

Während in dem Verbraucher beispielsweise die Gasfeuchtigkeit wieder erhöht, wird durch einen solchen Wärmetauscher die relative Feuchtigkeit wieder reduziert.

In bestimmten Fällen kann es jedoch auch von Vorteil sein, wenn das vom Verbraucher kommende Gas als Abgas bzw. Abluft abgeführt wird.

In diesem Fall kann der Regenerationseinrichtung beispielsweise nicht vom Verbraucher kommendes Gas, insbesondere Zuluft wie zum Beispiel Umgebungsluft, zugeführt werden. Grundsätzlich kann die Regenerationseinrichtung jedoch auch ohne zugeführtes Gas betrieben werden.

Wird die Regenerationseinrichtung von einem Gas durchströmt, so ist es von Vorteil, wenn die hygroskopische Lösung die Regenerationseinrichtung im Gegenstrom zum Gas durchströmt.

Eine weitere bevorzugte praktische Ausführungsform der erfindungsgemäßen Vorrichtung zeichnet sich dadurch aus, dass die Regenerationseinrichtung wenigstens eine von der aus der Absorptionseinrichtung austretenden hygroskopischen Lösung durchströmte Kondensations-/Verdampfungsstufe aufweist, die wenigstens eine Kondensationseinheit und wenigstens eine Verdampfereinheit umfasst, wobei eine jeweilige Kondensationseinheit einen zumindest teilweise von einer Kondensationswand begrenzten ersten Dampfraum und eine jeweilige Verdampfereinheit einen zumindest teilweise durch eine dampfdurchlässige flüssigkeitsdichte Membranwand begrenzten zweiten Dampfraum umfasst und in einer jeweiligen Kondensations-/Verdampfungsstufe wenigstens ein zwischen einer solchen Kondensationseinheit und einer solchen an diese angrenzenden Verdampfereinheit gebildeter, die hygroskopische Lösung führender Strömungskanal vorgesehen ist, so dass die hygroskopische Lösung über die Kondensationswand erhitzt wird und der aus der hygroskopischen Lösung entstehende Dampf durch die Membranwand hindurch in den zweiten Dampfraum gelangt.

Dabei weist die Regenerationseinrichtung zweckmäßigerweise eine von der aus der Kondensations-/Verdampfungsstufe austretenden hygroskopischen Lösung durchströmte Heizstufe auf, die wenigstens eine Heizeinheit und wenigstens eine Verdampfereinheit umfasst, wobei eine jeweilige Heizeinheit einen zumindest teilweise von einer fluiddichten wärmeleitenden Wand begrenzten Heizfluidraum und eine jeweilige Verdampfereinheit einen zumindest teilweise durch eine dampfdurchlässige flüssigkeitsdichte Membran begrenzten Dampfraum umfasst, in der Heizstufe wenigstens ein zwischen einer Heizeinheit und einer an diese angrenzenden Verdampfereinheit gebildeter, die hygroskopische Lösung führender Strömungskanal vorgesehen ist, so dass die hygroskopische Lösung über die fluiddichte wärmeleitende Wand beheizt wird und der aus der hygroskopischen Lösung entstehende Dampf durch die Membranwand hindurch in den Dampfraum gelangt, und der in diesem Dampfraum anfallende Dampf vorzugsweise einer Kondensationseinheit der Kondensations-/Verdampfungsstufe zugeführt wird.

Bevorzugt umfasst die Regenerationseinrichtung eine Kondensationsstufe mit wenigstens einer Kühleinheit und wenigstens einer Kondensationseinheit, wobei eine jeweilige Kühleinheit einen zumindest teilweise von einer fluiddichten wärmeleitenden Wand begrenzten Kühlfluidraum und eine jeweilige Kondensationseinheit einem zumindest teilweise von einer Kondensationswand begrenzten Dampfraum umfasst und in der Kondensationsstufe wenigstens eine Kühleinheit zumindest einer Kondensationseinheit unmittelbar benachbart ist, so dass die Kondensationswand der jeweiligen Kondensationseinheit über die Kühleinheit gekühlt wird. Dabei wird der Kondensationsstufe vorzugsweise in einer vorangehenden Kondensations-/Verdampfungsstufe entstehender Dampf zugeführt.

Umfasst die Regenerationseinrichtung das zuvor erwähnte System aus wenigstens einer Kondensations-/Verdampfungsstufe, Heizstufe und vorzugsweise auch Kondensationsstufe, so befindet sich dieses System bevorzugt im Unterdruck, das Kühlfluid und das Heizfluid vorzugsweise bei Umgebungsdruck und die hygroskopische Lösung vorzugsweise im Unterdruck. In der bzw. den Kondensations-/Verdampfungsstufen und der Heizstufe kann sich die hygroskopische Lösung über alle Stufen insbesondere auf der zum Absolutdruck im Dampfraum einer jeweiligen angrenzenden Verdampfereinheit korrespondierenden Siedetemperatur befinden, wie dies in der WO 2007/054311 beschrieben ist, die hiermit in den Offenbarungsgehalt der vorliegenden Anmeldung mit einbezogen wird.

Eine jeweilige Heizeinheit der Heizstufe kann von einem beispielsweise solar aufgeheizten Heizfluid durchströmt sein.

Der in eine jeweilige Kondensationseinheit der Kondensations-/Verdampfungsstufe eintretende Dampf kondensiert an den Kondensationsflächen. Die entsprechende Wärme wird über die betreffende Fläche an die hygroskopische Lösung übertragen. Der in dieser entstehende Dampf tritt durch die Membran der angrenzenden Verdampfereinheit hindurch in deren Dampfraum, der im Fall mehrerer Kondensations-/Verdampfungsstufen mit dem Druck des Dampfraums der jeweiligen Kondensationseinheit der darauffolgenden Kondensations-/Verdampfungsstufe kommuniziert.

Gemäß einer bevorzugten praktischen Ausführungsform der erfindungsgemäßen Vorrichtung ist diese als modulares Strömungssystem mit einer Vielzahl von Rahmenelementen ausgeführt. Dabei können die verschiedenen Funktionseinheiten wie insbesondere ein jeweiliger Gasströmungskanal, eine jeweilige Kühleinheit, eine jeweilige Heizeinheit, eine jeweilige Kondensationseinheit und/oder eine jeweilige Verdampfereinheit jeweils in Form eines solchen Rahmenelements vorgesehen sein.

Die Rahmenelemente sind vorzugsweise mit Stegstrukturen versehen, über die sie insbesondere zur Bildung der Absorptionseinrichtung, der Regenerationseinrichtung, einer jeweiligen Kondensations-/Verdampfungsstufe, der Heizstufe und/oder der Kondensationsstufe miteinander verbindbar sind.

Die Rahmenelemente können jeweils einen von einem äußeren Rahmen umschlossenen Innenbereich umfassen, der vorzugsweise mit einem insbesondere gitterartigen Abstandshalter versehen ist, auf dessen beiden Seiten zur Bildung eines jeweiligen Innen- oder Gasraumes, eines jeweiligen Dampfraums, eines jeweiligen Heizfluidraums oder eines jeweiligen Kühlfluidraums insbesondere jeweils eine entsprechende Funktionsfläche, vorzugsweise in Form einer Folie oder Membran, aufgebracht ist.

Bei den Stegstrukturen, über die die einzelnen Rahmenelemente miteinander verbunden werden können, kann es sich beispielsweise um Schweißstegstrukturen oder Klebestrukturen handeln, über die die Rahmenelemente miteinander verschweißt bzw. verklebt werden. Im Fall von Schweißstegstrukturen kann zur Verbindung der Rahmenelemente beispielsweise ein Reibschweißverfahren, Laserschweißverfahren und/oder Heizelementschweißverfahren angewandt werden.

Mit den erfindungsgemäßen Rahmenelementen kann die erfindungsgemäße Gastrocknungs- und/oder Gaskühlvorrichtung auf besonders einfache Weise aufgebaut und in der gewünschten Weise variiert werden. Die Rahmenelemente bzw. die über diese erhaltenen Einheiten bzw. Stufen zeichnen sich durch eine relativ einfache Form aus und bieten unterschiedliche Möglichkeiten der Gas- bzw. Luft-, Kühlfluid- und Heizfluidführung. Die betreffenden Trocknungs- und/oder Kühlprozesse sowie der Regenerationsprozess können beispielsweise nur mit Membranrahmenelementen oder mit einer Kombination aus Membranrahmenelementen und Folienrahmenelementen verwirklicht werden, wobei auch Rahmenelemente denkbar sind, die auf der einen Seite mit einer Membran und auf der anderen Seite mit einer Folie versehen sind.

Die Erfindung wird im Folgenden anhand von Ausführungsbeispielen unter Bezugnahme auf die Zeichnung näher erläutert; in dieser zeigen:

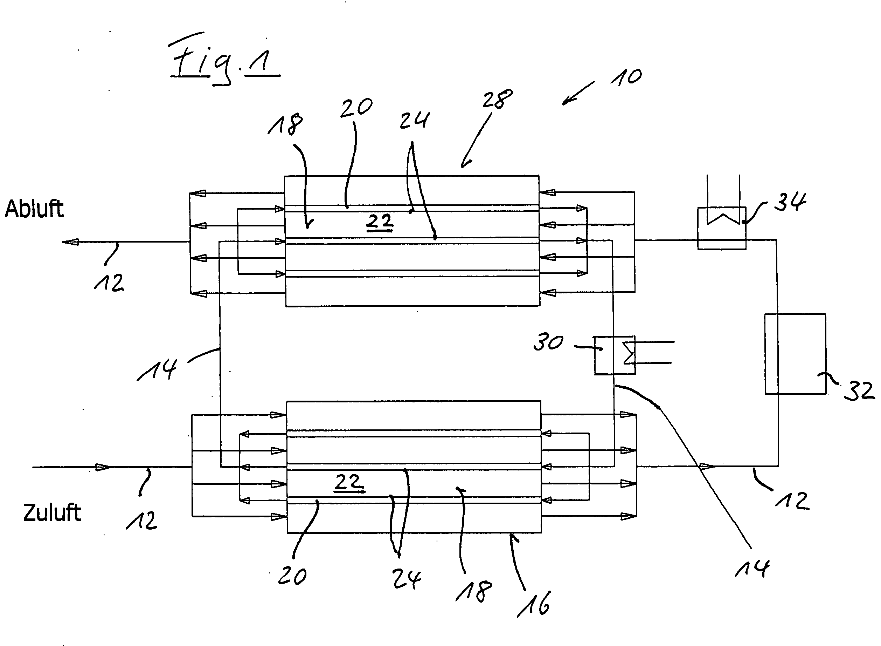

- Fig. 1: eine schematische Darstellung einer beispielhaften Ausführungsform einer Vorrichtung zum Trocknen und/oder Kühlen von Gas, bei der das aus der Absorptionseinrichtung austretende Gas einem Verbraucher und das von diesem kommende Gas einer Regenerationseinrichtung zugeführt wird und sowohl die Absorptionseinrichtung als auch die Regenerationseinrichtung jeweils wenigstens einen zwischen zwei Gasströmungskanälen gebildeten die hygroskopische Lösung führenden Strömungskanal umfasst,

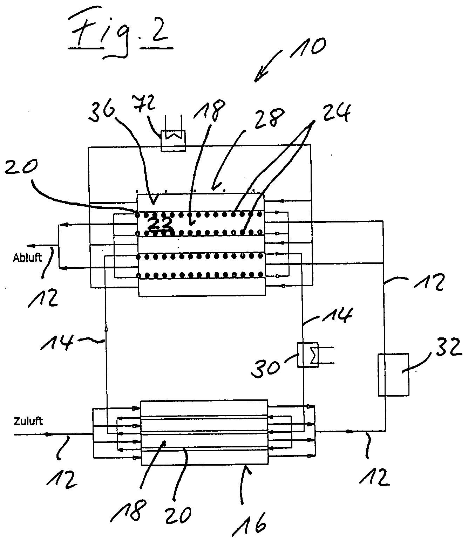

- Fig. 2: eine schematische Darstellung einer mit der Ausführungsform gemäß Fig. 1 vergleichbaren beispielhaften Ausführungsform der Vorrichtung, wobei die Regenerationseinrichtung jedoch wenigstens einen zwischen einem Gasströmungskanal und einer Heizeinheit gebildeten die hygroskopische Lösung führenden Strömungskanal umfasst,

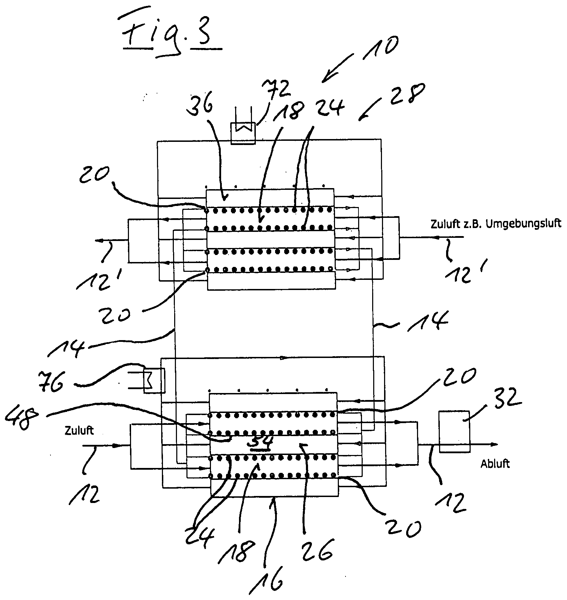

- Fig. 3: eine schematische Darstellung einer beispielhaften Ausführungsform einer Vorrichtung zum Trocknen und/oder Kühlen von Gas, bei der das vom Verbraucher kommende Gas als Abgas bzw. Abluft abgeführt und der Regenerationseinrichtung nicht vom Verbraucher kommendes Gas zugeführt wird und die Absorptionseinrichtung wenigstens einen zwischen einem Gasströmungskanal und einer Kühleinheit gebildeten die hygroskopische Lösung führenden Strömungskanal und die Regenerationseinrichtung wieder wenigstens einen zwischen einem Gasströmungskanal und einer Heizeinheit gebildeten die hygroskopische Lösung führenden Strömungskanal umfasst,

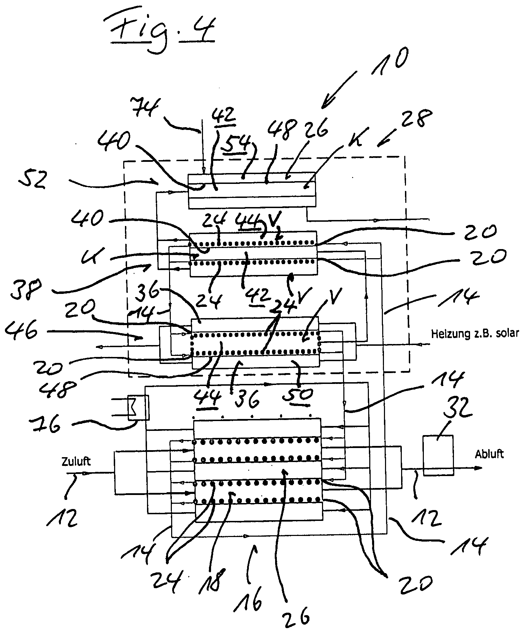

- Fig. 4: eine schematische Darstellung einer beispielhaften Ausführungsform einer Vorrichtung zum Trocknen und/oder Kühlen von Gas, bei der das vom Verbraucher kommende Gas als Abgas bzw. Abluft abgeführt wird, die Absorptionseinrichtung wieder wenigstens einen zwischen einem Gasströmungskanal und einer Kühleinheit gebildeten die hygroskopische Lösung führenden Strömungskanal und die Regenerationseinrichtung wenigstens eine Kondensations-/Verdampfungsstufe, eine Heizstufe und vorzugsweise eine Kondensationsstufe umfasst,

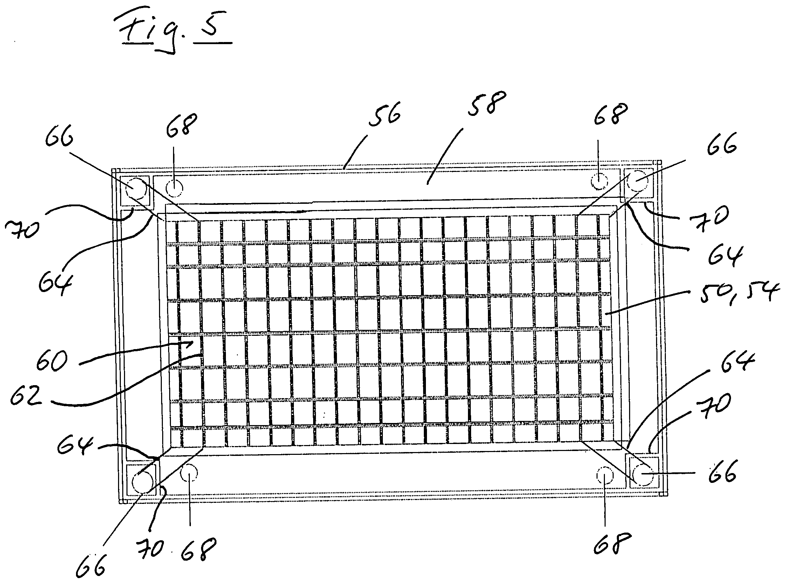

- Fig. 5: eine schematische Darstellung einer beispielhaften Ausführungsform eines Rahmenelements, das insbesondere sowohl als Kühl- als auch als Heizeinheit sowie als Kondensationseinheit einsetzbar ist,

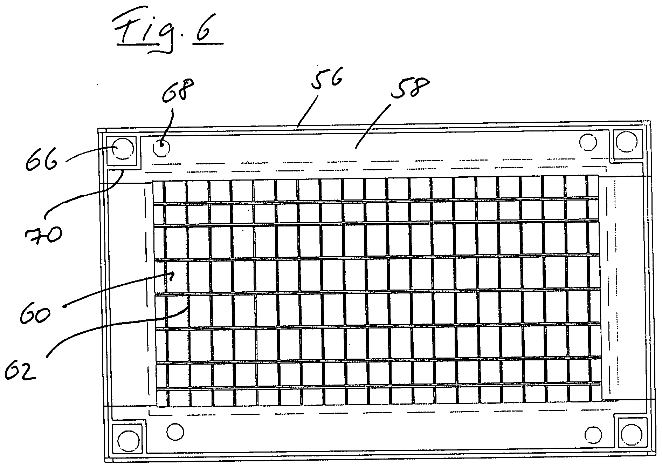

- Fig. 6: eine schematische Darstellung einer beispielhaften Ausführungsform eines z.B. einen Gas- bzw. Luftkanal oder eine Verdampfereinheit bildenden Rahmenelements, und

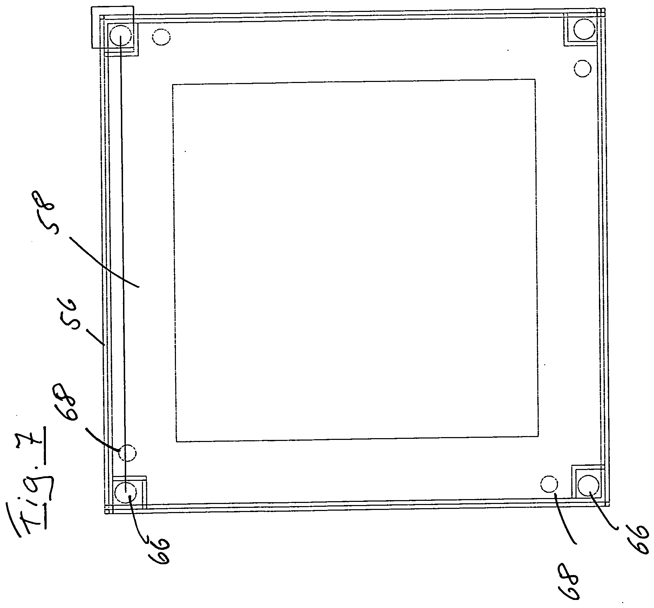

- Fig. 7: eine schematische Darstellung einer beispielhaften Ausführungsform eines im Querschnitt quadratischen Rahmenelements.

In den verschiedenen Figuren sind einander entsprechenden Teilen gleiche Bezugszeichen zugeordnet.

Die Fig. 1 bis 3 zeigen in schematischer Darstellung jeweils eine beispielhafte Ausführungsform einer Vorrichtung 10 zum Trocknen und/oder Kühlen von Gas 12 mittels einer hygroskopischen Lösung 14, wobei es sich bei dem Gas 12 beispielsweise um Luft handeln kann.

Dabei umfasst die Vorrichtung 10 eine Absorptionseinrichtung 16 mit wenigstens einem Gasströmungskanal 18 sowie wenigstens einem die hygroskopische Lösung 14 führenden Strömungskanal 20. Dabei ist der Innen- oder Gasraum 22 eines jeweiligen Gasströmungskanals 18 zumindest teilweise durch eine dampfdurchlässige flüssigkeitsdichte Membranwand 24 begrenzt.

Es ist wenigstens ein zwischen einem solchen Gasströmungskanal 18 und einem an diesen angrenzenden weiteren solchen Gasströmungskanal 18 (vgl. die Fig. 1 und 2) oder einer angrenzenden Kühleinheit 26 (vgl. die Fig. 3 und 4) gebildeter, die hygroskopische Lösung 14 führender Strömungskanal 20 vorgesehen, so dass Feuchtigkeit, insbesondere Wasserdampf, aus dem Gas 12 über die Membranwand 24 in die hygroskopische Lösung 18 übergeht und in dieser absorbiert wird.

Dabei kann die hygroskopische Lösung 14 die Absorptionseinrichtung 16 im Gegenstrom zum Gas 12 durchströmen.

Die Absorptionseinrichtung 16 kann mehrere zueinander parallele Gasströmungskanäle 18 sowie mehrere zueinander parallele die hygroskopische Lösung 14 führende Strömungskanäle 20 umfassen.

Wie den Fig. 1 und 2 entnommen werden kann, können die die hygroskopische Lösung 14 führenden Strömungskanäle 20 der Absorptionseinrichtung 16 jeweils zwischen zwei aneinandergrenzenden Gasströmungskanälen 18 gebildet sein.

Es sind jedoch insbesondere auch solche Ausführungsformen denkbar, bei denen die die hygroskopische Lösung 14 führenden Strömungskanäle 20 der Absorptionseinrichtung 16 jeweils zwischen einem Gasströmungskanal 18 und einer angrenzenden Kühleinheit 26 gebildet sind (vgl. die Fig. 3 und 4). Dabei umfasst eine jeweilige Kühleinheit 26 vorzugsweise einen zumindest teilweise von einer fluiddichten wärmeleitenden Wand 48 begrenzten Kühlfluidraum 54.

Die aus der Absorptionseinrichtung 16 austretende hygroskopische Lösung 14 kann einer Regenerationseinrichtung 28 zugeführt werden, in der sie regeneriert wird. Die regenerierte hygroskopische Lösung 14 wird dann vorzugsweise wieder der Absorptionseinrichtung 16 zugeführt.

Wie den Fig. 1 und 2 entnommen werden kann, kann die regenerierte hygroskopische Lösung 14 der Absorptionseinrichtung 16 insbesondere über einen Kühler 30 zugeführt werden.

Das aus der Absorptionseinrichtung 16 austretende Gas 12 kann einem Verbraucher 32 zugeführt werden.

In bestimmten Fällen ist es von Vorteil, wenn das vom Verbraucher 32 kommende Gas 12 der Regenerationseinrichtung 28 zugeführt wird (vgl. die Fig. 1 und 2).

Dabei kann das vom Verbraucher 32 kommende Gas 12 der Regenerationseinrichtung 28 über einen Wärmetauscher 34 zugeführt werden, in dem das Gas 12 vorzugsweise erwärmt wird.

Das vom Verbraucher 32 kommende Gas 12 kann jedoch auch als Abgas bzw. Abluft abgeführt werden (vgl. die Fig. 3 und 4).

Dabei kann der Regenerationseinrichtung 28 beispielsweise nicht vom Verbraucher 32 kommendes Gas 12', insbesondere Zuluft wie zum Beispiel Umgebungsluft, zugeführt werden (vgl. Fig. 3). Es sind jedoch auch solche Ausführungsformen denkbar, bei denen die Regenerationseinrichtung 28 weder von vom Verbraucher 32 kommendem Gas noch von nicht vom Verbraucher kommendem Gas durchströmt wird (vgl. beispielsweise Fig. 4).

In dem Fall, dass die Regenerationseinrichtung 28 von Gas durchströmt wird, kann die hygroskopische Lösung 14 die Regenerationseinrichtung 28 insbesondere im Gegenstrom zum Gas 12, 12' durchströmen (vgl. die Fig. 1 bis 3).

Wie insbesondere wieder den Fig. 1 bis 3 entnommen werden kann, kann die Regenerationseinrichtung 28 wenigstens einen Gasströmungskanal 18 sowie wenigstens einen die hygroskopische Lösung 14 führenden Strömungskanal 20 umfassen, wobei der Innen- oder Gasraum 22 eines jeweiligen Gasströmungskanals 18 zumindest teilweise durch eine dampfdurchlässige flüssigkeitsdichte Membranwand 24 begrenzt ist und wenigstens ein zwischen einem solchen Gasströmungskanal 18 und einem an diesen angrenzenden weiteren solchen Gasströmungskanal 18 (vgl. Fig. 1) oder einer angrenzenden Heizeinheit 36 (vgl. die Fig. 2 und 3) gebildeter, die hygroskopische Lösung 14 führender Strömungskanal vorgesehen ist, so dass Feuchtigkeit, insbesondere Wasserdampf, aus der hygroskopischen Lösung über die Membranwand 24 in das Gas 12 bzw. 12' übergeht und die hygroskopische Lösung 14 konzentriert wird.

Dabei kann die Regenerationseinrichtung 28 mehrere zueinander parallele Gasströmungskanäle 18 sowie mehrere zueinander parallele die hygroskopische Lösung 14 führende Strömungskanäle 20 umfassen (vgl. die Fig. 1 bis 3).

Insbesondere im letzteren Fall können die die hygroskopische Lösung führenden Strömungskanäle 20 der Regenerationseinrichtung 28 jeweils zwischen zwei aneinandergrenzenden Gasströmungskanälen 18 gebildet sein (vgl. Fig. 1). Es sind jedoch beispielsweise auch solche Ausführungsformen denkbar, bei denen die die hygroskopische Lösung 14 führenden Strömungskanäle 20 der Regenerationseinrichtung 28 jeweils zwischen einem Gasströmungskanal 18 und einer angrenzenden Heizeinheit 36 gebildet sind.

Die Regenerationseinrichtung 28 kann beispielsweise auch wenigstens eine von der aus der Absorptionseinrichtung 16 austretenden hygroskopischen Lösung 14 durchströmte Kondensations-/Verdampfungsstufe 38 aufweisen, die wenigstens eine Kondensationseinheit K und wenigstens eine Verdampfereinheit V umfasst (vgl. Fig. 4).

Hierbei umfasst eine jeweilige Kondensationseinheit K einen zumindest teilweise von einer Kondensationswand 40 begrenzten ersten Dampfraum 42 und eine jeweilige Verdampfereinheit V einen zumindest teilweise durch eine dampfdurchlässige flüssigkeitsdiche Membranwand 24 begrenzten zweiten Dampfraum 44. Dabei ist in einer jeweiligen Kondensations-/Verdampfungsstufe 38 wenigstens ein zwischen einer solchen Kondensationseinheit K und einer solchen an diese angrenzenden Verdampfereinheit V gebildeter, die hygroskopische Lösung 14 führender Strömungskanal 20 vorgesehen. Die hygroskopische Lösung 14 wird hierbei über die Kondensationswand 40 erhitzt, und der aus der hygroskopischen Lösung 14 entstehende Dampf gelangt durch die Membranwand 24 hindurch in den zweiten Dampfraum 44.

Zudem kann die Regenerationseinrichtung 28 eine von der aus der Kondensations-/Verdampfungsstufe 38 austretenden hygroskopischen Lösung 14 durchströmte Heizstufe 46 aufweisen, die wenigstens eine Heizeinheit 36 und wenigstens eine Verdampfereinheit V umfasst (vgl. wieder Fig. 4).

Dabei umfasst eine jeweilige Heizeinheit 36 einen zumindest teilweise von einer fluiddichten wärmeleitenden Wand 48 begrenzten Heizfluidraum 50 und eine jeweilige Verdampfereinheit V einen zumindest teilweise durch eine dampfdurchlässige flüssigkeitsdichte Membranwand 24 begrenzten Dampfraum 44. In der Heizstufe 46 ist wenigstens ein zwischen einer Heizeinheit 36 und einer an diese angrenzenden Verdampfereinheit V gebildeter, die hygroskopische Lösung 14 führender Strömungskanal 20 vorgesehen, so dass die hygroskopische Lösung 14 über die fluiddichte wärmeleitende Wand 48 beheizt wird und der aus der hygroskopischen Lösung 14 entstehende Dampf durch die Membranwand 24 hindurch in den Dampfraum 44 gelangt. Der in diesem Dampfraum 44 anfallende Dampf wird vorzugsweise einer Kondensationseinheit K der Kondensations-/Verdampfungsstufe 38 zugeführt (vgl. wieder Fig. 4).

Wie ebenfalls wieder der Fig. 4 entnommen werden kann, kann die Regenerationseinrichtung 28 auch eine Kondensationsstufe 52 mit wenigstens einer Kühleinheit 26 und wenigstens einer Kondensationseinheit K umfassen. Hierbei weist eine jeweilige Kühleinheit 26 einen zumindest teilweise von einer fluiddichten wärmeleitenden Wand 48 begrenzten Kühlfluidraum 54 und eine jeweilige Kondensationseinheit K einen zumindest teilweise von einer Kondensationswand 40 begrenzten Dampfraum 42 auf. In der Kondensationsstufe 52 ist wenigstens eine Kühleinheit 26 zumindest einer Kondensationseinheit K unmittelbar benachbart, so dass die Kondensationswand 40 der jeweiligen Kondensationseinheit K über die Kühleinheit 26 gekühlt wird. Dieser Kondensationseinheit K wird vorzugsweise in einer vorangehenden Kondensations-/Verdampfungsstufe 38 entstehender Dampf zugeführt.

Eine jeweilige Vorrichtung 10 zum Trocknen und/oder Kühlen von Gas kann insbesondere als modulares Strömungssystem mit einer Vielzahl von Rahmenelementen (vgl. die Fig. 5 bis 7) ausgeführt sein. Dabei können die verschiedenen Funktionseinheiten wie insbesondere ein jeweiliger Gasströmungskanal 18, eine jeweilige Kühleinheit 26, eine jeweilige Heizeinheit 36, eine jeweilige Kondensationseinheit K und/oder eine jeweilige Verdampfereinheit V jeweils in Form eines solchen Rahmenelements vorgesehen sein. Die Rahmenelemente sind vorzugsweise mit Stegstrukturen 56 versehen, über die sie insbesondere zur Bildung der Absorptionseinrichtung 16, der Regenerationseinrichtung 28 bzw. einer jeweiligen Kondensations-/Verdampfungsstufe 38, der Heizstufe 46 und/oder der Kondensationsstufe 38 der Regenrationseinrichtung 28 miteinander verbindbar sind. Die Rahmenelemente können jeweils einen von einem äußeren Rahmen 58 umschlossenen Innenbereich 60 umfassen, der vorzugsweise mit einem insbesondere gitterartigen Abstandshalter 62 versehen ist, auf dessen beiden Seiten zur Bildung eines jeweiligen Innen- oder Gasraumes 22, eines jeweiligen Dampfraums 42, 44 eines jeweiligen Heizfluidraums 50 oder eines jeweiligen Kühlfluidraums 54 usw. insbesondere jeweils eine entsprechende Funktionsfläche, vorzugsweise in Form einer Folie oder Membran, aufgebracht ist.

Dabei kann eine jeweilige Membran insbesondere die Funktion einer Membranwand 24 und eine jeweilige Folie insbesondere die Funktion einer Kondensationswand 40 oder einer fluiddichten wärmeleitenden Wand 48 übernehmen.

Über die Stegstrukturen 56 können die verschiedenen Rahmenelemente beispielsweise miteinander verschweißt oder verklebt werden. Werden beispielsweise Schweißstegstrukturen verwendet, so kann zur Verbindung der Rahmenelemente beispielsweise ein Reibschweißverfahren, Laserschweißverfahren und/oder Heizelementschweißverfahren angewandt werden.

Fig. 5 zeigt in schematischer Darstellung eine beispielhafte Ausführungsform eines Rahmenelements, das beispielsweise sowohl als Kühl- als auch als Heizeinheit 26 bzw. 36 einsetzbar ist. Der Abstandshalter 62 kann im vorliegenden Fall beidseitig insbesondere jeweils mit einer Folie versehen sein. Der zwischen den Folien gebildete Heizfluid- oder Kühlfluidraum 50 bzw. 54 wird vom Heiz- bzw. Kühlfluid, z.B. Wasser durchströmt. Das Heiz- bzw. Kühlfluid wird über Kanäle 64, zum Beispiel Wasserkanäle, dem Heiz- bzw. Kühlfluidraum 50 bzw. 54 zugeführt und aus diesem wieder entfernt. Die Kanäle 64 sind mit insbesondere in den Eckbereichen des Rahmenelements vorgesehen Durchführungen 66 insbesondere für das Heiz- bzw. Kühlfluid verbunden. Insbesondere im Bereich der Durchführungen 66 sind zudem Durchführungen 68 insbesondere für die hygroskopische Lösung 14 vorgesehen.

Es können beispielsweise die auf der linken Seite der Fig. 5 vorgesehenen Durchführungen 66, 68 für einen Heiz- oder Kühlfluideintritt bzw. Lösungseintritt und die auf der rechten Seite der Fig. 5 vorgesehenen Durchführungen 66, 68 beispielsweise für einen Heiz- oder Kühlfluidaustritt bzw. einen Lösungsaustritt vorgesehen sein. Grundsätzlich können Eintritt und Austritt für das Fluid bzw. die Lösung jedoch auch anderweitig angeordnet sein. Über diese Durchführungen 66, 68 können beispielsweise Gleich-, Gegen- oder Kreuzgegenströme realisiert werden.

Das Rahmenelement ist im vorliegenden Fall beispielsweise im Querschnitt rechteckig. Grundsätzlich ist jedoch beispielsweise auch eine quadratische Form denkbar (vgl. beispielsweise Fig. 7).

Die Durchführungen 66 können beispielsweise jeweils durch einen Stegabschnitt 70 zum Innenbereich 60 hin abgegrenzt sein.

Das Rahmenelement gemäß Fig. 5 mit insbesondere beidseitig vorgesehenen Folien kann insbesondere auch als Kondensationseinheit K vorgesehen sein, wobei in diesem Fall zwischen den Folien ein entsprechender Dampfraum 44 gebildet sein kann.

Fig. 6 zeigt in schematischer Darstellung eine beispielhafte Ausführungsform eines z.B. einen Gas- bzw. Luftströmungskanal oder eine Verdampfereinheit V bildenden Rahmenelements. Im vorliegenden Fall kann insbesondere beidseitig des Abstandshalters 62 jeweils eine dampfdurchlässige, wasserdichte Membran aufgebracht sein. Das Rahmenelement kann insbesondere zur Bildung eines Gas- bzw. Luftströmungskanals z.B. auf den beiden Schmalseiten zum Innenbereich 60 hin offen sein.

Auch in der Darstellung gemäß Fig. 6 sind wieder Durchführungen 66, 68 sowie Stegabschnitte 70 zu erkennen.

Auch dieses in der Fig. 6 dargestellte Rahmenelement ist im Querschnitt wieder rechteckig.

Die Folien und Membranen können mit den Rahmenelementen beispielsweise verklebt oder verschweißt sein. Grundsätzlich ist auch eine andere Art der Befestigung dieser Folien und Membranen denkbar.

Fig. 7 zeigt in schematischer Darstellung eine beispielhafte Ausführungsform eines im Querschnitt quadratischen Rahmenelements. Dabei sind in dieser Darstellung insbesondere auch wieder Durchführungen 66, 68 zu erkennen.

Im Fall dieses einen quadratischen Querschnitt besitzenden Rahmenelements sind die Durchführungen 66, 68 rotationssymmetrisch angeordnet. Bei einer Drehung um 90° kommen also stets Durchführungen gleicher Funktion in Draufsicht aufeinander zu liegen. Mit einer solchen Anordnung können auch klassische Kreuzstromapparate aufgebaut werden. Durch Drehen der Rahmenelemente um 90° wird eine solche Schaltung erreicht.

Im Übrigen kann dieses Rahmenelement insbesondere wieder so ausgeführt sein, wie dies anhand der Fig. 5 und 6 beschrieben wurde.

Die verschiedenen Rahmenelemente können also entsprechend der zu erfüllenden Funktion relativ zueinander angeordnet werden. Dabei kann beispielsweise ein in Form einer Kondensationseinheit K vorgesehenes Rahmenelement insbesondere mit Kondensationsfolie und ein in Form einer Verdampfereinheit V vorgesehenes Rahmenelement insbesondere mit Membran bespannt sein. Durch das Zusammenbringen eines in Form einer Kondensationseinheit K vorgesehenen, mit Folie versehenen Rahmenelements und eines in Form einer Verdampfereinheit V vorgesehenen, mit Membran versehenen Rahmenelements ergibt sich zwischen Membran und Folie ein jeweiliger die hygroskopische Lösung 14 führender Strömungskanal 20. In diesem Strömungskanal 20 kann noch ein Abstandshalter eingelegt werden. Anstelle eines solchen Abstandshalters kann beispielsweise auch der insbesondere gitterartige Abstandshalter 46 so ausgeführt werden, dass sich beim Füllen des Strömungskanals 20 definierte Kanäle zum Führen der Lösung ausbilden.

Wie sich aus der Fig. 1 ergibt, kann beispielsweise ein Wärme- und Stoffaustauscher mit Membranrahmenelementen realisiert werden. Es kann beispielsweise feuchte und warme Luft durch den Wärme- und Stoffaustauscher geschickt werden, der Luftkühler und Lufttrockner in einem ist.

Durch den von Membranen begrenzten die hygroskopische Lösung führenden Strömungskanal kann im Gegenstrom beispielsweise so viel konzentrierte hygroskopische Lösung gefahren werden, dass die über die Membranen strömende Luft bzw. Gas sowohl getrocknet als auch gekühlt wird. Dabei verdünnt und erwärmt sich die Lösung. Die gekühlte und getrocknete Luft wird dem Verbraucher, beispielsweise einem Schiff oder dergleichen, zugeführt. Im Verbraucher wird die Luft durch Lasten wie zum Beispiel elektrische Verbraucher und Personen wieder erwärmt, und die Luftfeuchte erhöht sich durch den Verbraucher bzw. die Personen. Die Rückluft, die insbesondere bei großen Schiffen wie zum Kreuzfahrtschiffen nahezu der Zuluft entspricht, kann in einem Wärmetauscher erwärmt werden, so dass die relative Feuchtigkeit sinkt. Im Desorber bzw. der Regenerationseinrichtung kommt diese Luft über die Membran mit der verdünnten Lösung in Kontakt. Aus der verdünnten Lösung wird nun Wasser ausgetrieben. Die Lösung wird konzentriert und durch die Verdunstung des Wassers abgekühlt. In einem nachgeschalteten optionalen Kühler kann die konzentrierte Lösung noch weiter abgekühlt und wieder der Absorptionseinrichtung zugeführt werden.

Wie beispielsweise der Fig. 2 entnommen werden kann, kann der Wärme- und Stoffaustauscher bzw. die Absorptionseinrichtung beispielsweise mit Membranrahmenelementen und die Regenerationseinrichtung beispielsweise mit Membranrahmenelementen und Folienrahmenelementen realisiert werden. Der Regenerator bzw. Desorber ist hier also aus Membranrahmelementen und Folienrahmenelementen aufgebaut. Im Desorber bzw. der Regenerationseinrichtung strömt durch die Folienrahmenelemente beispielsweise warmes Wasser, das die Lösung erwärmt und Wasser aus der Lösung austreibt. Die Verdampfungswärme wird hier beispielsweise durch Abkühlen des warmen Wassers aus dem Heizkreislauf bereitgestellt. Die vom Verbraucher zuströmende Luft wird auch über die beheizte Lösung erwärmt und kann Feuchtigkeit aufnehmen. Die aufkonzentrierte Lösung kann über einen dem Desorber bzw. der Regenerationseinrichtung nachgeschalteten Kühler gekühlt werden.

Wie der Fig. 3 entnommen werden kann, kann ein gekühlter Absorber bzw. eine gekühlte Absorptionseinrichtung und ein beheizter Desorber bzw. eine beheizte Regenerationseinrichtung vorgesehen sein. Eine solche Kombination ist insbesondere dann von Vorteil, wenn in der betreffenden Anlage für den Absorber und den Desorber jeweils Außenluft verwendet wird. Auch für eine Kältespeicherung in konzentrierter Lösung ist dies ein geeigneter Prozess, da im gekühlten Absorber eine große Wasserbeladung der Lösung erreich werden kann. Absorption und Desorption können hier auch an getrennten Orten stattfinden. Die konzentrierte Lösung könnte dann als Kältespeicher dem Verbraucher angeliefert werden. Die verdünnte Lösung könnte dann zurückgeführt werden.

Wie der Fig. 4 entnommen werden kann, kann ein gekühlter Absorber bzw. eine gekühlte Absorptionseinrichtung in Kombination mit einer Regenerationseinrichtung vorgesehen sein, die ein der Aufkonzentrierung der hygroskopischen Lösung dienendes System mit zumindest einer Kondensations-/Verdampfungsstufe sowie einer Heizstufe und vorzugsweise einer Kondensationsstufe umfasst. Dabei befindet sich das System innerhalb der gestrichelten Linie der Fig. 4 im Unterdruck. Kühlfluid und Heizfluid sind auf Umgebungsdruck, und die Lösung ist im Unterdruck. Dabei sind die Verhältnisse im Wesentlichen so, wie dies in der WO 2007/054311 beschrieben ist. Eine solche Kombination ist insbesondere dann effizient, wenn keine Abwärme zur Desorption der Lösung zur Verfügung steht. Mit einem entsprechend mehrstufigen Aufkonzentrierungsprozess kann über die Anzahl der verschiedenen Stufen der Energiebedarf zur Desorption deutlich reduziert werden. Von besonderem Vorteil ist auch, dass im Desorptionsprozess destilliertes Wasser entsteht, das heißt Wasser wird aus der feuchten Luft gewonnen.

Wie den Fig. 2 und 3 entnommen werden kann, kann im jeweiligen Heizfluidkreislauf der Regenerationseinrichtung 28 beispielsweise ein Wärmetauscher 72 vorgesehen sein.

Wie der Fig. 4 entnommen werden kann, kann der Kondensationsstufe 52 bzw. deren Kühleinheiten 26 beispielsweise Kühlwasser 74 zugeführt werden. Das Heizfluid für die Heizeinheiten 36 der Heizstufe 46 kann beispielsweise solar beheizt sein.

Wie beispielsweise den Fig. 3 und 4 entnommen werden kann, kann dem Kühlfluidkreislauf der Absorptionseinrichtung bzw. des gekühlten Absorbers ein Kühler 76 zugeordnet sein.

Anstelle von Luft kann grundsätzlich auch ein beliebiges anderes Gas vorgesehen sein. Zudem muss bei der jeweiligen Entfeuchtung nicht zwingend Wasserdampf entfernt werden. Bei der Entfeuchtung kann auch ein beliebiger anderer Stoffaustausch erfolgen.

### Bezugszeichenliste

- 10: Vorrichtung zum Trocknen und/oder Kühlen von Gas
- 12: Gas
- 12': nicht vom Verbraucher kommendes Gas
- 14: hygroskopische Lösung
- 16: Absorptionseinrichtung, Absorber
- 18: Gasströmungskanal
- 20: die hygroskopische Lösung führender Strömungskanal
- 22: Innen- oder Gasraum
- 24: Membranwand
- 26: Kühleinheit
- 28: Regenerationseinrichtung, Desorber
- 30: Kühler
- 32: Verbraucher
- 34: Wärmetauscher
- 36: Heizeinheit
- 38: Kondensations-/Verdampfungsstufe
- 40: Kondensationswand
- 42: erster Dampfraum
- 44: zweiter Dampfraum
- 46: Heizstufe
- 48: fluiddichte wärmeleitende Wand
- 50: Heizfluidraum
- 52: Kondensationsstufe
- 54: Kühlfluidraum
- 56: Stegstruktur
- 58: äußerer Rahmen
- 60: Innenbereich
- 62: Abstandshalter
- 64: Kanal
- 66: Durchführung für das Heiz- oder Kühlfluid
- 68: Durchführung für die hygroskopische Lösung
- 70: Stegabschnitt
- 72: Wärmetauscher
- 74: Kühlwasser
- 76: Kühler

- K: Kondensationseinheit
- V: Verdampfereinheit

## Patentansprüche

1. Vorrichtung (10) zum Trocknen und/oder Kühlen von Gas (12), insbesondere Luft, mittels einer hygroskopischen Lösung (14), mit einer Absorptionseinrichtung (16), die wenigstens einen Gasströmungskanal (18) sowie wenigstens einen die hygroskopische Lösung (14) führenden Strömungskanal (20) umfasst, wobei der Innen- oder Gasraum (22) eines jeweiligen Gasströmungskanals (18) zumindest teilweise durch eine dampfdurchlässige flüssigkeitsdichte Membranwand (24) begrenzt ist und wenigstens ein zwischen einem solchen Gasströmungskanal (18) und einem an diesen angrenzenden weiteren solchen Gasströmungskanal (18) oder einer angrenzenden Kühleinheit (26) gebildeter, die hygroskopische Lösung (14) führender Strömungskanal (20) vorgesehen ist, so dass Feuchtigkeit, insbesondere Wasserdampf, aus dem Gas (12) über die Membranwand (24) in die hygroskopische Lösung (18) übergeht und in dieser absorbiert wird, wobei die Vorrichtung (10) eine Regenerationseinrichtung (28) umfasst, der die aus der Absorptionseinrichtung (16) austretende hygroskopische Lösung (14) zugeführt wird, wobei die aus der Absorptionseinrichtung (16) austretende hygroskopische Lösung (14) in der Regenerationseinrichtung (28) regeneriert wird und die regenerierte hygroskopische Lösung (14) wieder der Absorptionseinrichtung (16) zugeführt wird
**dadurch gekennzeichnet,**
**dass** die Regenerationseinrichtung (28) mehrere zueinander parallele Gasströmungskanäle (18) sowie mehrere zueinander parallele die hygroskopische Lösung (14) führende Strömungskanäle (20) umfasst, wobei die die hygroskopische Lösung (14) führenden Strömungskanäle (20) jeweils zwischen einem Gasströmungskanal (18) und einer angrenzenden Heizeinheit (36) gebildet sind und wobei der Innen- oder Gasraum (22) eines jeweiligen Gasströmungskanals (18) zumindest teilweise durch eine dampfdurchlässige flüssigkeitsdichte Membranwand (24) begrenzt ist und wenigstens ein zwischen einem solchen Gasströmungskanal (18) und einer an diesen angrenzenden Heizeinheit (36) gebildeter, die hygroskopische Lösung (14) führender Strömungskanal (20) vorgesehen ist, so dass Feuchtigkeit, insbesondere Wasserdampf, aus der hygroskopischen Lösung über die Membranwand (24) in das Gas (12, 12') übergeht und die hygroskopische Lösung (14) konzentriert wird.

2. Vorrichtung nach Anspruch 1,
**dadurch gekennzeichnet,**
**dass** die hygroskopische Lösung (14) die Absorptionseinrichtung (16) im Gegenstrom zum Gas (12) durchströmt.

3. Vorrichtung nach Anspruch 1 oder 2,
**dadurch gekennzeichnet,**
**dass** die Absorptionseinrichtung (16) mehrere zueinander parallele Gasströmungskanäle (18) sowie mehrere zueinander parallele die hygroskopische Lösung führende Strömungskanäle (20) umfasst.

4. Vorrichtung nach Anspruch 3,
**dadurch gekennzeichnet,**
**dass** die die hygroskopische Lösung (14) führenden Strömungskanäle (20) der Absorptionseinrichtung (16) jeweils zwischen zwei aneinandergrenzenden Gasströmungskanälen (18) gebildet sind.

5. Vorrichtung nach Anspruch 3,
**dadurch gekennzeichnet,**
**dass** die die hygroskopische Lösung (14) führenden Strömungskanäle (20) der Absorptionseinrichtung (16) jeweils zwischen einem Gasströmungskanal (18) und einer angrenzenden Kühleinheit (26) gebildet sind, wobei eine jeweilige Kühleinheit (26) einen zumindest teilweise von einer fluiddichten wärmeleitenden Wand (48) begrenzten Kühlfluidraum (54) umfasst.

6. Vorrichtung nach einem der vorhergehenden Ansprüche,
**dadurch gekennzeichnet,**
**dass** die Vorrichtung einen Kühler (30) umfasst, über den die regenerierte hygroskopische Lösung (14) der Absorptionseinrichtung (16) zugeführt wird.

7. Vorrichtung nach einem der vorhergehenden Ansprüche,
**dadurch gekennzeichnet,**
**dass** das aus der Absorptionseinrichtung (16) austretende Gas (12) einem Verbraucher (32) zugeführt wird.

8. Vorrichtung nach einem der vorhergehenden Ansprüche,
**dadurch gekennzeichnet,**
**dass** das vom Verbraucher (32) kommende Gas (12) der Regenerationseinrichtung (28) zugeführt wird.

9. Vorrichtung nach Anspruch 8,
**dadurch gekennzeichnet,**
**dass** das vom Verbraucher (32) kommende Gas (12) der Regenerationseinrichtung (28) über einen Wärmetauscher (34) zugeführt wird, in dem das Gas (12) vorzugsweise erwärmt wird.

10. Vorrichtung nach Anspruch 7,
**dadurch gekennzeichnet,**
**dass** das vom Verbraucher (32) kommende Gas (12) als Abgas bzw. Abluft abgeführt wird.

11. Vorrichtung nach Anspruch 10,
**dadurch gekennzeichnet,**
**dass** der Regenerationseinrichtung (28) nicht vom Verbraucher (32) kommendes Gas (12'), insbesondere Zuluft wie z.B. Umgebungsluft, zugeführt wird.

12. Vorrichtung nach einem der vorhergehenden Ansprüche,
**dadurch gekennzeichnet,**
**dass** die hygroskopische Lösung (14) die Regenerationseinrichtung (28) im Gegenstrom zum Gas (12, 12') durchströmt.

13. Vorrichtung nach einem der vorhergehenden Ansprüche, insbesondere nach Anspruch 10,
**dadurch gekennzeichnet,**
**dass** die Regenerationseinrichtung (28) wenigstens eine von der aus der Absorptionseinrichtung (16) austretenden hygroskopischen Lösung (14) durchströmte Kondensations-/Verdampfungsstufe (38) aufweist, die wenigstens eine Kondensationseinheit (K) und wenigstens eine Verdampfereinheit (V) umfasst, wobei eine jeweilige Kondensationseinheit (K) einen zumindest teilweise von einer Kondensationswand (40) begrenzten ersten Dampfraum (42) und eine jeweilige Verdampfereinheit (V) einen zumindest teilweise durch eine dampfdurchlässige flüssigkeitsdichte Membranwand (24) begrenzten zweiten Dampfraum (44) umfasst und in einer jeweiligen Kondensations-/Verdampfungsstufe (38) wenigstens ein zwischen einer solchen Kondensationseinheit (K) und einer solchen an diese angrenzenden Verdampfereinheit (V) gebildeter, die hygroskopische Lösung (14) führender Strömungskanal (20) vorgesehen ist, so dass die hygroskopische Lösung (14) über die Kondensationswand (40) erhitzt wird und der aus der hygroskopischen Lösung (14) entstehende Dampf durch die Membranwand (24) hindurch in den zweiten Dampfraum (44) gelangt.

14. Vorrichtung nach Anspruch 13,
**dadurch gekennzeichnet,**
**dass** die Regenerationseinrichtung (28) eine von der aus der Kondensations-/Verdampfungsstufe (38) austretenden hygroskopischen Lösung (14) durchströmte Heizstufe (46) aufweist, die wenigstens eine Heizeinheit (36) und wenigstens eine Verdampfereinheit (V) umfasst, wobei eine jeweilige Heizeinheit (36) einen zumindest teilweise von einer fluiddichten wärmeleitenden Wand (48) begrenzten Heizfluidraum (50) und eine jeweilige Verdampfereinheit (V) einen zumindest teilweise durch eine dampfdurchlässige flüssigkeitsdichte Membranwand (24) begrenzten Dampfraum (44) umfasst, in der Heizstufe (46) wenigstens ein zwischen einer Heizeinheit (36) und einer an diese angrenzenden Verdampfereinheit (V) gebildeter, die hygroskopische Lösung (14) führender Strömungskanal (20) vorgesehen ist, so dass die hygroskopische Lösung (14) über die fluiddichte wärmeleitende Wand (48) beheizt wird und der aus der hygroskopischen Lösung (14) entstehende Dampf durch die Membranwand (24) hindurch in den Dampfraum (44) gelangt, und der in diesem Dampfraum anfallende Dampf vorzugsweise einer Kondensationseinheit (K) der Kondensations-/Verdampfungsstufe (38) zugeführt wird.

15. Vorrichtung nach Anspruch 13 oder 14,
**dadurch gekennzeichnet,**
**dass** die Regenerationseinrichtung (28) eine Kondensationsstufe (52) mit wenigstens einer Kühleinheit (26) und wenigstens einer Kondensationseinheit (K) umfasst, wobei eine jeweilige Kühleinheit (26) einen zumindest teilweise von einer fluiddichten wärmeleitenden Wand (48) begrenzten Kühlfluidraum (54) und eine jeweilige Kondensationseinheit (K) einen zumindest teilweise von einer Kondensationswand (40) begrenzten Dampfraum (42) umfasst und in der Kondensationsstufe (K) wenigstens eine Kühleinheit (26) zumindest einer Kondensationseinheit (K) unmittelbar benachbart ist, so dass die Kondensationswand (40) der jeweiligen Kondensationseinheit (K) über die Kühleinheit (26) gekühlt wird, und wobei der Kondensationsstufe (K) vorzugsweise in einer vorangehenden Kondensations-/Verdampfungsstufe (38) entstehender Dampf zugeführt wird.

16. Vorrichtung nach einem der vorhergehenden Ansprüche,
**dadurch gekennzeichnet,**
**dass** sie als modulares Strömungssystem mit einer Vielzahl von Rahmenelementen ausgeführt ist und die verschiedenen Funktionseinheiten wie insbesondere ein jeweiliger Gasströmungskanal (18), eine jeweilige Kühleinheit (26), eine jeweilige Heizeinheit (36), eine jeweilige Kondensationseinheit (K) und/oder eine jeweilige Verdampfereinheit (V) jeweils in Form eines solchen Rahmenelements vorgesehen sind, wobei die Rahmenelemente vorzugsweise mit Stegstrukturen (56) versehen sind, über die sie insbesondere zur Bildung der Absorptionseinrichtung (16), der Regenerationseinrichtung (28), einer jeweiligen Kondensations-/Verdampfungsstufe (38), der Heizstufe und/oder der Kondensationsstufe (52) miteinander verbindbar sind, und jeweils einen von einem äußeren Rahmen (58) umschlossenen Innenbereich (60) umfassen, der vorzugsweise mit einem insbesondere gitterartigen Abstandshalter (62) versehen ist, auf dessen beiden Seiten zur Bildung eines jeweiligen Innen- oder Gasraumes (22), eines jeweiligen Dampfraums (42, 44), eines jeweiligen Heizfluidraums (50) oder eines jeweiligen Kühlfluidraums (54) insbesondere jeweils eine entsprechende Funktionsfläche, vorzugsweise in Form einer Folie oder Membran, aufgebracht ist.

## Claims

1. An apparatus (10) for drying and/or cooling gas (12), in particular air, by means of a hygroscopic solution (14), comprising an absorption device (16), which comprises at least one gas flow passage (18) and at least one flow passage (20) conducting the hygroscopic solution (14), wherein the inner space or gas space (22) of a respective gas flow passage (18) is at least partly bounded by a vapor-permeable, liquid tight membrane wall (24) and wherein at least one flow passage (20) is provided, which conducts the hygroscopic solution (14) and is formed between such a gas flow passage (18) and a further such gas flow passage (18) adjacent thereto or an adjacent cooling unit (26), so that moisture, in particular water vapor, is transferred from the gas (12) via the membrane wall (24) into the hygroscopic solution (18) and is absorbed therein, wherein the apparatus (10) comprises a regeneration device (28), which is supplied by the hygroscopic solution (14) exiting the absorption device (16), wherein the hygroscopic solution (14) exiting the absorption device (16) is regenerated in the regeneration device (28) and the regenerated hygroscopic solution (14) is again supplied to the absorption device (16),
**characterized in that**
the regeneration device (28) comprises a plurality of gas flow passages (18) in parallel with one another and a plurality of flow passages (20) in parallel with one another and conducting the hygroscopic solution (14), wherein the flow passages (20) conducting the hygroscopic solution (14) are respectively formed between a gas flow passage (18) and an adjacent heating unit (36) and wherein the inner space or gas space (22) of a respective gas flow passage (18) is at least partly bounded by a vapor-permeable, liquid tight membrane wall (24) and that at least one flow passage (20) is provided, which conducts the hygroscopic solution (14) and is formed between such a gas flow passage (18) and a heating unit (36) adjacent thereto, so that moisture, in particular water vapor, is transferred from the hygroscopic solution via the membrane wall (24) into the gas (12, 12') and so that the hygroscopic solution (14) is concentrated.

2. The apparatus according to claim 1, **characterized in that** the hygroscopic solution (14) flows through the absorption device (16) in counterflow to the gas (12).

3. The apparatus according to claim 1 or 2, **characterized in that** the absorption device (16) comprises a plurality of gas flow passages (18) in parallel to one another and a plurality of flow passages (20) in parallel with one another and conducting the hygroscopic solution (14).

4. The apparatus according to 3, **characterized in that** the flow passages (20) of the absorption device (16) conducting the hygroscopic solution (14) are respectively formed between two mutually adjacent gas flow passages (18).

5. The apparatus according to claim 3, **characterized in that** the flow passages (20) of the absorption device (16) conducting the hygroscopic solution (14) are respectively formed between a gas flow passage (18) and an adjacent cooling unit (26), wherein a respective cooling unit (26) comprises a cooling fluid space (54) at least partly bounded by a fluid-tight, heat-conducting wall (48).

6. The apparatus according to any of the preceding claims, **characterized in that** the apparatus comprises a cooler (30) via which the regenerated hygroscopic solution (14) is supplied to the absorption device (16).

7. The apparatus according to any of the preceding claims, **characterized in that** the gas (12) exiting the absorption device (16) is supplied to a consumer (32).

8. The apparatus according to any of the preceding claims, **characterized in that** the gas (129 coming from the consumer (32) is supplied to the regeneration device (28).

9. The apparatus according to claim 8, **characterized in that** the gas (12) coming from the consumer (32) is supplied to the regeneration device (28) via a heat exchanger (34) in which the gas (12) is preferably heated.

10. The apparatus according to claim 7, **characterized in that** the gas (12) coming from the consumer (32) is led off as exhaust gas or as exhaust air.

11. The apparatus according to claim 10, **characterized in that** gas (12') not coming from the consumer (32), in particular inflow air such as ambient air, is supplied to the regeneration device (28).

12. The apparatus according to any of the preceding claims, **characterized in that** the hygroscopic solution (14) flows through the regeneration device (28) in counterflow to the gas (12, 12').

13. The apparatus according to any of the preceding claims, in particular according to claim 10, **characterized in that** the regeneration device (28) comprises at least one condensation/evaporation stage (38), through which the hygroscopic solution exiting the absorption device (16) flows and which comprises at least one condensation unit (K) and at least one evaporator unit (V), wherein a respective condensation unit (K) comprises a first vapor space (42) at least partly bounded by a condensation wall (40) and wherein a respective evaporator unit (V) comprises a second vapor space (44) at least partly bounded by a vapor-permeable, liquid-tight membrane wall (24) and wherein at least one flow passage (20) conducting the hygroscopic solution(14) is formed between such a condensation unit (K) and such an evaporator unit adjacent (V) thereto so that the hygroscopic solution (14) is heated via the condensation wall (40) and so that the vapor arising from the hygroscopic solution (14) is transferred through the membrane wall (24) into the second vapor space (44).

14. The apparatus according to claim 13, **characterized in that** the regeneration device (28) comprises a heating stage (46), through which the hygroscopic solution (14) exiting the condensation/evaporation stage (38) flows and which comprises at least one heating unit (36) and at least one evaporator unit (V), wherein a respective heating unit (36) comprises a heating fluid space (50) at least partly bounded by a fluid-tight, heat-conducting wall (48) and wherein a respective evaporator unit (V) comprises a vapor space (44) at least partly bounded by a vapor-permeable, liquid-tight membrane wall (24), wherein at least one flow passage (20) conducting the hygroscopic solution (14) is provided in the heating stage (46), which is formed between a heating unit (36) and an evaporator unit (V) adjacent thereto so that the hygroscopic solution (14) is heated via the fluid-tight, heat-conducting wall (48) and that the vapor arising from the hygroscopic solution (14) is transferred via the membrane wall (24) into the vapor space (44) and the vapor arising in this vapor space is preferably supplied to a condensation unit (K) of the condensation/evaporation stage (38).

15. The apparatus according to claim 13 or 14, **characterized in that** the regeneration device (28) comprises a condensation stage (52) having at least one cooling unit (26) and at least one condensation unit (K), wherein a respective cooling unit (26) comprises a cooling fluid space (54) at least partly bounded by a fluid-tight, heat-conducting wall (48) and wherein a respective condensation unit (K) comprises a vapor space (42) at least partly bounded by a condensation wall (40) and wherein at least one cooling unit (26) is disposed directly adjacent to at least one condensation unit (K) in the condensation stage (K), so that the condensation wall (40) of the respective condensation unit (K) is cooled via the cooling unit (26), and wherein vapor arising in a preceding condensation/evaporation stage (38) is preferably supplied to the condensation stage (K).

16. The apparatus according to any of the preceding claims, **characterized in that** it is designed as a modular flow system comprising a plurality of frame elements and that the different functional units, such as in particular a respective gas flow passage (18), a respective cooling unit (26), a respective heating unit (36), a respective condensation unit (K) and/or a respective evaporator unit (V) are respectively provided in the form of such a frame elements, wherein the frame elements are preferably provided with web structures (56) via which they can be connected to one another particularly for forming the absorption device (16), the regeneration device (28), a respective condensation/evaporation stage (3 8), the heating stage and/or the condensation stage (52) and respectively comprise an inner region (60), which is surrounded by an outer frame (58) and which is preferably provided with spacer (62), which is in particular grid-like, a respective corresponding functional surface being applied at the two sides thereof, preferably in the form of a film or membrane, for forming a respective inner space or gas space (22), a respective vapor space (42, 44), a respective heating fluid space (50) or a respective cooling fluid space (54).

## Revendications

1. Un appareil (10) pour le séchage et/ou refroidissement de gaz (12), en particulier d'air, au moyen d'une solution hygroscopique (14), avec un dispositif d'absorption (16), lequel comprend au moins un canal d'écoulement de gaz (18) et au moins un canal d'écoulement (20) conduisant la solution hygroscopique (14), dans lequel l'espace intérieur ou l'espace de gaz (22) d'un canal d'écoulement de gaz respectif (18) est au moins partiellement délimité par une cloison membrane perméable, étanche aux liquides, et dans lequel au moins un canal d'écoulement (20) est fourni, lequel assure l'écoulement de la solution hygroscopique (14) et qui est formé entre un tel canal d'écoulement de gaz (18) et un canal d'écoulement de gaz supplémentaire (18) adjacent, de telle façon que l'humidité, en particulier la vapeur d'eau, est transférée du gaz (12) à travers la paroi de la membrane (24) jusque dans la solution hygroscopique (18) passe au-dessus et y est absorbée et s'y trouve absorbée, dans lequel l'appareil (10) comporte un dispositif de régénération (28), qui est fourni par la solution hygroscopique (14) quittant le dispositif d'absorption (16), dans lequel la solution hygroscopique (14) quittant le dispositif d'absorption (16) se trouve régénérée au sein du dispositif de régénération (28) et la solution hygroscopique régénérée (14) est à nouveau fournie au dispositif d'absorption (16),
**caractérisé en ce que**
le dispositif de régénération (28) comporte une pluralité de canaux d'écoulement de gaz (18) parallèles entre eux et une pluralité de canaux d'écoulement (20) parallèles entre eux pour l'écoulement de la solution hygroscopique (14), dans lequel les canaux d'écoulement (20) permettant l'écoulement de la solution hygroscopique (14) sont respectivement formés entre un canal d'écoulement de gaz (18) et une unité de chauffage adjacente (36) et dans lequel l'espace intérieur ou l'espace de gaz (22) d'un canal d'écoulement de gaz respectif (28) est au moins partiellement délimité par une cloison membrane perméable, étanche aux liquides, et dans lequel au moins un canal d'écoulement (20) est fourni, lequel assure l'écoulement de la solution hygroscopique (14) et qui est formé entre un tel canal d'écoulement de gaz (18) et une unité de chauffage (36) adjacente, de telle manière que l'humidité, en particulier la vapeur d'eau, est transférée du gaz (12) à travers la paroi de la membrane (24) jusque dans le gaz (12, 12'), concentrant ainsi la solution hygroscopique (14).

2. L'appareil selon la revendication 1, **caractérisé en ce que** la solution hygroscopique (14) circule à travers le dispositif d'absorption (16) à contre-courant du gaz (12).

3. L'appareil selon la revendication 1 ou 2, **caractérisé en ce que** le dispositif d'absorption (16) une pluralité de canaux parallèles d'écoulement de gaz (18) et une pluralité de canaux d'écoulement (20) parallèles entre eux permettant l'écoulement de la solution hygroscopique (20).

4. L'appareil selon la revendication 3, **caractérisé en ce que** les canaux d'écoulement (20) du dispositif d'absorption (16) permettant l'écoulement de la solution hygroscopique (14) sont respectivement formés entre deux canaux d'écoulement de gaz (18) mutuellement adjacents.

5. L'appareil selon la revendication 3, **caractérisé en ce que** les canaux d'écoulement (20) du dispositif d'absorption (16) pour l'écoulement de la solution hygroscopique (14) sont respectivement formés entre un canal d'écoulement de gaz (18) et une unité de refroidissement adjacente (26), dans lequel une unité de refroidissement respective (26) comporte un espace de fluide de refroidissement (52) au moins partiellement délimité par une paroi membrane perméable conductrice de chaleur.

6. L'appareil selon l'une quelconque des revendications précédentes, **caractérisé en ce que** l'appareil comporte un refroidisseur (30) par lequel la solution hygroscopique (14) est fournie au dispositif d'absorption (16).

7. L'appareil selon l'une quelconque des revendications précédentes, **caractérisé en ce que** le gaz (12) sortant du dispositif d'absorption (16) est fourni à un consommateur.

8. L'appareil selon l'une quelconque des revendications précédentes, **caractérisé en ce que** le gaz (12) venant du consommateur (32) est fourni au dispositif de régénération (28).

9. L'appareil selon la revendication 8, **caractérisé en ce que** le gaz (12) venant du consommateur (32) est fourni au dispositif de régénération (28) via un échangeur de chaleur (34) dans lequel, de préférence, le gaz est réchauffé.

10. L'appareil selon la revendication 7, **caractérisé en ce que** le gaz (12) venant du consommateur (32) est évacué en tant que gaz d'échappement ou air viclé.

11. L'appareil selon la revendication 10, **caractérisé en ce que** le gaz (12') qui ne provient pas du consommateur (32), en particulier l'air d'entrée tel que l'air ambiant, est fournie au dispositif de régénération (28).

12. L'appareil selon l'une des revendications précédentes, **caractérisé en ce que** la solution hygroscopique (14) s'écoule au travers du dispositif de régénération (28) en contre-courant du gaz (12, 12').

13. L'appareil selon l'une quelconque des revendications précédentes, en particulier selon la revendication 10, **caractérisé en ce que** le dispositif de dégénération (28) comporte au moins un étage de condensation/d'évaporation (38), au travers duquel la solution hygroscopique sortante du dispositif d'absorption (16) s'écoule et qui comporte au moins une unité de condensation (K) et au moins une unité d'évaporation (V), dans lequel une unité de condensation respective (K) comporte un premier espace de vapeur (42) au moins partiellement délimité par une paroi de condensation (40) et dans laquelle une unité d'évaporation respective (V) comporte un second espace de vapeur (44) au moins partiellement délimité par une paroi membrane perméable, étanche aux liquides (24) et dans lequel au moins un canal d'écoulement (20) pour l'écoulement de la solution hygroscopique (14) est formé entre une telle unité de condensation (K) et une telle unité d'évaporation adjacente (V) de telle manière que la solution hygroscopique (14) est chauffée via la paroi de condensation (40) et ainsi la vapeur s'élevant de la solution hygroscopique (14) est transférée au travers la paroi membrane (24) à l'intérieur du second espace vapeur (44).

14. L'appareil selon a revendication 13 **caractérisé en ce que** le dispositif de régénération (28) comporte un étage de chauffage (46), au travers duquel la solution hygroscopique (14) sortant de l'étage de condensation/évaporation (38) s'écoule et qui comporte au moins une unité de chauffage (36) et au moins une unité d'évaporation (V), dans lequel une unité de chauffage respectif (36) comprend un espace de chauffage de fluide (50) au moins partiellement délimité par une paroi (48) étanche aux fluides, conductrice de chaleur, et dans lequel une unité d'évaporation respective (V) comporte un espace de vapeur (44) au moins partiellement délimité par une paroi membrane perméable à la vapeur, étanche aux liquides, dans lequel au moins un canal d'écoulement (20) pour l'écoulement de la solution hygroscopique (14) est fourni à l'étage de chauffage (46), qui est formé entre une unité de chauffage (36) et une unité d'évaporation (V) adjacente de telle manière que la solution hygroscopique (14) est chauffée via la paroi (48) étanche aux liquides, conductrice de chaleur, et la vapeur s'élevant de la solution hygroscopique (14) est transférée via la paroi membrane (24) au sein de l'espace vapeur (44) et la vapeur s'élevant dans cet espace vapeur est fournie de préférence à une unité de condensation (K) de l'étage de condensation/évaporation (38).

15. L'appareil selon la revendication 13 ou 14, **caractérisé en ce que** le dispositif de régénération (28) comporte un étage de condensation (52) ayant au moins une unité de refroidissement (26) et au moins une unité de condensation (K), dans lequel une unité de refroidissement respective (26) comporte un espace de refroidissement de fluide (54) au moins partiellement délimité par une paroi étanche aux liquides, conductrice de chaleur (48) et dans lequel une unité de condensation respective (K) comporte un espace de vapeur (42) au moins partiellement délimité par une paroi de condensation (40) et dans lequel au moins une unité de refroidissement (26) est disposée directement adjacente à au moins une unité de condensation (K) au sein de l'étage de condensation (K), de telle manière que la paroi de condensation (40) de l'unité de condensation respective (K) est refroidie via l'unité de refroidissement (26), et dans lequel la vapeur s'élevant au sein d'un étage de condensation/d'évaporation (38) est fournie de préférence à l'étage de condensation (K).

16. L'appareil selon l'une quelconque des revendications précédentes, **caractérisé en ce qu'**il est conçu comme un système d'écoulement modulaire ayant une pluralité d'éléments et **en ce que** les différentes unités fonctionnelles, telles que notamment un canal d'écoulement de gaz respectif (18), une unité de refroidissement respective (26), une unité de chauffage respectif (36), une unité de condensation respectif (K) et/ou une unité d'évaporation respective (V) sont respectivement fournies sous la forme d'un tel élément cadre, dans lequel les éléments cadres sont de préférences fournies avec des structures de connexion (56) par lesquelles elles peuvent être connectées les unes aux autres, en particulier pour former le dispositif d'absorption (16), le dispositif de régénération (28), un étage de condensation/évaporation respectif (38), l'étage de chauffage et/ou l'étage de condensation (52) et comporte respectivement une région interne (60), qui est entourée par un cadre extérieur (58) et qui est de préférence fourni avec un espaceur (62), qui est en particulier sous forme de grille, une surface fonctionnelle correspondante respective étant appliquée aux deux côtés, de préférence dans la forme d'un film ou d'une membrane, pour former un espace intérieur respectif ou un espace de gaz (22), un espace de vapeur respectif (42, 44), un espace de chauffage de fluide respectif (50) ou un espace de refroidissement de fluide respectif (54).
